# EUROPEAN PATENT APPLICATION

(11) **EP 1 422 127 A1**
(43) Date of publication of application: **26.05.2004**
(21) Application number: 02425673.7
(22) Date of filing: 05.11.2002
(51) Int. Cl.: B62D 33/023

(54) **Board for vehicle bodies**

(71) Applicant: Scattolini S.p.A., 37067 Valeggio sul Mincio (Verona) (IT)
(72) Inventor: Scattolini, Dario, 37019 Peschiera del Garda (Verona) (IT)
(74) Representative: Lanzoni, Luciano

(57) **Abstract**

Board for bodies (2) for vehicles (3) comprising a main aluminium section bar (4) elongated according to a main direction of development, and extending from a first end portion (5) to a second end portion (6), and a first and a second aluminium heads (16), (17) respectively associated to a first and to a second end portion (5), (6) of the main section bar (4). The main section bar (4) has an inner surface (7), an outer surface (8) and a base surface (10) able to be associated to a bottom wall of a body (2). The outer surface (8) of the main section bar (49 is undulated at least in correspondence with the first end portion (5). A least the first section head (16) is elongated perpendicularly relative to the main direction of development and comprises at least a first outer connecting shoulder (18) developing at least in part on the outer surface (8) of the main section bar (4) whereto it is substantially counter-shaped.

## Description

The present invention relates to a board for vehicle bodies comprising the characteristics expressed in the preamble to claim 1.

The field of application of the present invention is that of bodies for vehicles in which to a bottom wall are applied boards on the four sides, and which may be closed superiorly by an appropriate sheet.

In particular, the present invention can advantageously be applied both to fixed boards and to swivelling boards (application whereto explicit reference is made herein), destined to be applied to bodies for motor vehicles such as lorries, trucks, or others besides. The present invention can be applied to body boards for any type of vehicle.

Today, very many types of boards are used, some made of bent plate, others of aluminium.

The present invention is destined to be applied to boards made of aluminium, in which the different parts constituting the board are obtained directly from section bars.

The aluminium boards used today comprise a main section bar elongated horizontally to whose end portions are applied two heads constituted by a U shaped aluminium section bar that encompasses the respective end portion of the main section bar.

The main section bar has an outer surface facing the exterior of the body, and an inner surface facing the interior of the body.

The section bar in general can comprise either a single wall that defines both the outer and the inner surface, or two walls identifying a chamber between them, each of which defines either the outer surface or the inner surface.

In the case of double walled section bars, there can be both cases in which the chamber has constant width if viewed in vertical section, and cases in which the chamber comprises multiple superposed segments having different width. This second case occurs, for instance, for complex boards in which areas in which the section bar is constituted by a single aluminium wall alternate with areas in which it is constituted by two walls.

This type is used to define, in correspondence with the passage from a double wall area to a single wall area, a supporting edge for fastening the covering sheet to the body.

Among the different solutions currently in use, the solution of the double wall along the entire extension of the board allows not to show on the vehicle exterior any dents which may be caused on the inner wall when loading and unloading material from the body.

All aluminium section bars known today have a substantially smooth outer surface, with the drawback of a limited ability of the board to withstand longitudinal flexion.

When the board remains horizontal for prolonged time intervals, i.e. in the opened position, there is a risk that it may warp.

As to the heads, they are constituted by a secondary section bar with U shaped section, having constant width corresponding to the maximum width of the main section bar. In the secondary section bar is also housed a hook for locking the board in the vertical position.

Because of the U shape of the secondary section board and of the variable width of the main one, in the area of the heads are created, between the main and the secondary section bar, recesses that may can some drawbacks.

In the first place, dirt constantly accumulates in said recesses, and water and/or dirt can be infiltrated inside the section bar.

In the second place, when the vehicle travels, such recesses are, because of the air that is wedged therein, a source both of friction and, in some cases, of noise.

Additionally, they can also constitute a hazard since they can inadvertently cause a snag for bicyclists and motorcyclists.

To overcome such drawbacks, appropriate plastic caps are often inserted in the recesses to close them.

In this situation the technical task constituting the basis of the present invention is to provide a body board for vehicles, which overcomes the aforementioned drawbacks.

In particular, a technical task of the present invention is to provide a body board for vehicles that has a greater longitudinal rigidity than existing boards.

Yet another technical task of the present invention is to provide a body board for vehicles in which there is no constant accumulation of dirt between the head and the main section bar.

A further technical task of the present invention is to provide a body board for vehicles in which both air friction and the noise produced during travel are minimised.

The specified technical tasks and the indicated aims are substantially achieved by a body board for vehicles, as described in the accompanying drawings.

Further features and advantages of the invention shall become more readily apparent from the detailed description that follows of some preferred, but not exclusive embodiments of a body board for vehicles, illustrated in the accompanying drawings, in which:
- Figure 1 shows a section view of a first embodiment of the aluminium section bar of the board of the present invention;
- Figure 2 shows a section view of a second embodiment of the aluminium section bar of the board of the present invention;
- Figure 3 shows a section bar of a third embodiment of the aluminium section bar of the board of the present invention;
- Figure 4 shows a detail of Figure 3 according to the trace IV-IV;
- Figure 5 shows a different embodiment of the board of Figure 3;
- Figure 6 shows a different embodiment of an element of the boards illustrated in Figures 3 through 5;
- Figure 7 shows an interrupted lateral view of a board constructed with the section bar of Figure 1;
- Figure 8 shows the board of Figure 7 according to the trace VIII-VIII;
- Figure 9 shows an additional embodiment of the present invention applied as the rear board of a body mounted on a vehicle;
- Figure 10 shows an enlarged detail of Figure 9;
- Figure 11 shows a different embodiment of the board of Figure 9;
- Figure 12 shows an enlarged detail of Figure 11;
- Figure 13 shows a section view of a detail of the board of Figure 11,
- Figure 14 shows a front elevation view of a detail of Figure 13.

With reference to the aforementioned figures, the reference number 1 globally indicates a board for bodies 2 for vehicles 3, according to the present invention.

The board 1 of the present invention comprises a main aluminium section bar 4 elongated according to a main direction of development (which is horizontal when the board 1 is applied to a body 2) and extending from a first end portion 5 to a second end portion 6.

The main section bar 4 defines an inner surface 7, an outer surface 8, a top portion 9, and a base portion 10 able to be associated to a bottom wall of a box 2, and it is advantageously constituted by a single piece.

According to the present invention, the outer surface 8 of the main section bar 4 is undulated at least in correspondence with the first and/or with the second end portion 5, 6, though it is preferably elongated along its entire extension from the first to the second end portion 5, 6, as illustrated in the accompanying tables.

In the illustrated embodiments the base portion 10 is so constructed as to allow hinging the board 1 to the bottom wall of the body 2.

Preferably, the board 1 of the present invention is constituted (as shown in the accompanying figures) by an inner wall 11 defining the inner surface 7, by an outer wall 12 defining the outer surface 8, and by a head wall 13 joining the inner wall 11 to the outer wall 12.

As illustrated, the base portion 10 also joins inferiorly the inner wall 11 to the outer wall 12.

In this way the main section bar 4 defines in its interior one or more chambers 14 delimited by appropriate internal connections 15 between the two walls 11, 12.

The head wall 13, in known fashion, is mushroom shaped (in section view) in order to optimise the coupling of the main section bar 4 with the two heads 16, 17 in correspondence with the end portions 5, 6.

In particular a first and a second aluminium head 16, 17 (the second head is not shown herein) are associated respectively to the first and to the second end portion 5, 6.

Each head 16, 17 is constituted by a single piece of a secondary section bar, and it is elongated perpendicularly relative to the main direction of development.

The first and the second head 16, 17 respectively comprise a first and a second external shoulder 18, 19, and a first and a second internal shoulder 20, 21 for connection to the main section bar 4.

The first and the second external shoulder 18, 19 develop at least in part on the outer surface 8 of the main section bar 4, whereto they are substantially counter-shaped.

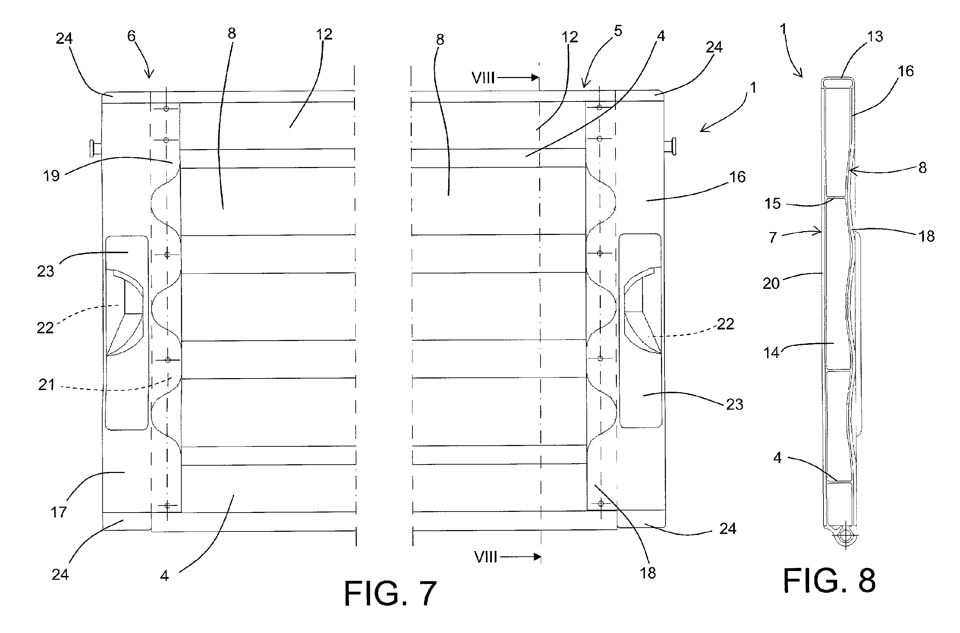

In particular, if the outer surface 8 of the related end portions is undulated, the external shoulders 18, 19 of the heads 16, 17 also have an undulated profile, as shown in Figures 7 and 8.

In the embodiment shown in Figure 7, each head 16, 17 has a housing 22 in which are mounted known means 23 for locking the board 1.

Additionally, two junction elements 24 are mounted on the comers of the board 1 for each head 16, 17.

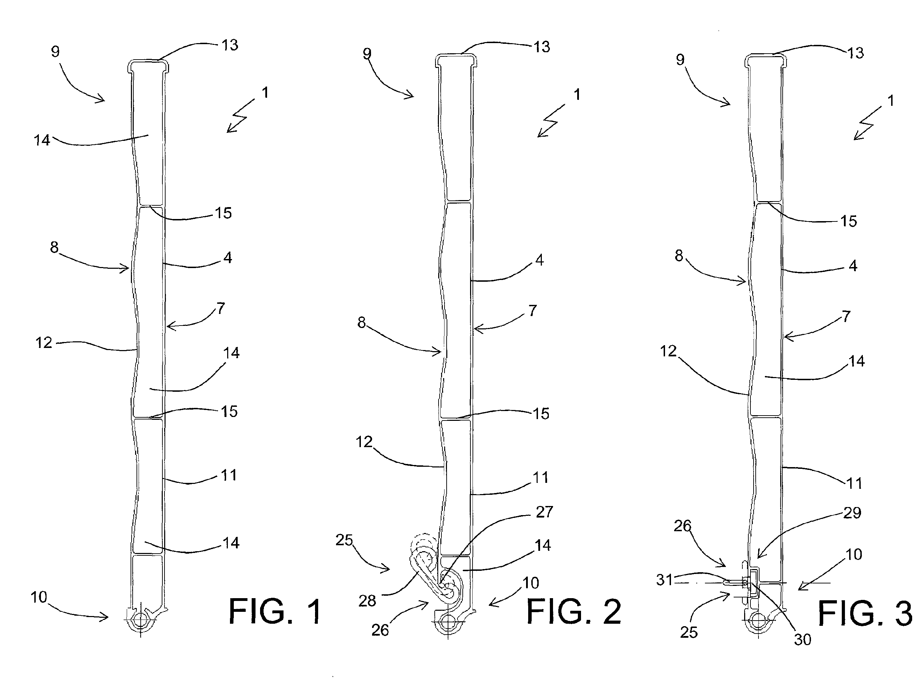

In some embodiments, the board 1 of the present invention further comprises fastening means 25 for fastening to the board 1 itself a covering sheet (not shown herein) for the body 2 (Figures 2-6).

According to a first embodiment shown in Figure 2, the fastening means 25 comprise at least a seat 26 obtained in the outer surface 8, which extends parallel to the main direction of development.

In the illustrated embodiment, the seat 26 is defined by the outer wall 12 and superiorly has a tooth 27 for fastening the sheet by means of an appropriate hook 28.

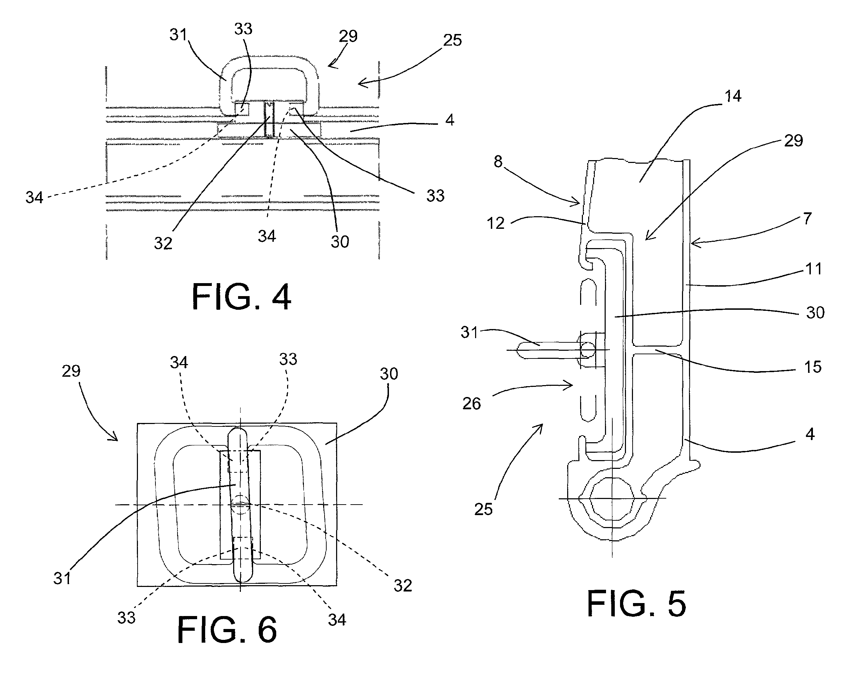

In a second embodiment illustrated in Figure 3, the outer surface 8 is provided with a longitudinal seat 26, inside which is inserted in sliding fashion a plurality of connecting elements 29, constituted by a base 30 associated in sliding fashion to the seat 26 and by a ring 31 pivotally engaged to the base 30.

The base 30 is provided with a through screw 32 facing the seat 26, which allows selectively to lock and unlock the connecting element 29 to enable to position it in the most correct position along the seat 26.

The ring 31 is movable from at least a first position (in particular the illustrated embodiments provide for two diametrically opposite first positions) in which it lies in a first plane, parallel to the one defined by the board 1, to a second position in which it is positioned in a second plane, perpendicular to the one defined by the board 1. The second plane can advantageously be either horizontal or vertical, depending on the type of sheet used.

In the embodiment illustrated in Figure 5, the ring 31 when it is in the first position, is recessed relative to the outer surface 8.

In Figures 3 through 5, the ring 31 is pivotally engaged to the base 30 by means of the insertion of its own two ends 33 in two aligned holes 34 obtained in the base 30. In this way the ring 31 is free to rotate relative to the base 30.

On the contrary, Figure 6 shows a ring 31 having its ends 33 inserted, by means of an elastic deformation of the ring 31 itself, in two holes 34 having parallel but not aligned axes. In this way, the ring 31 is in a stable equilibrium condition when it is in the first or in the second position, while it is in an unstable equilibrium condition when it is in intermediate positions between the first and the second position.

Advantageously, the fastening means 25 are positioned in proximity to the base portion 10 of the board 1. In this way the outer surface 8 of the board 1 remains free with the advantages set out below.

The present invention also has an additional characteristic in regard to the rear boards 1 of the bodies 2.

There are regulations prescribing that the lights 35 of the vehicles 3 must always be visible at least in part, even when the rear board 1 is open and covers them.

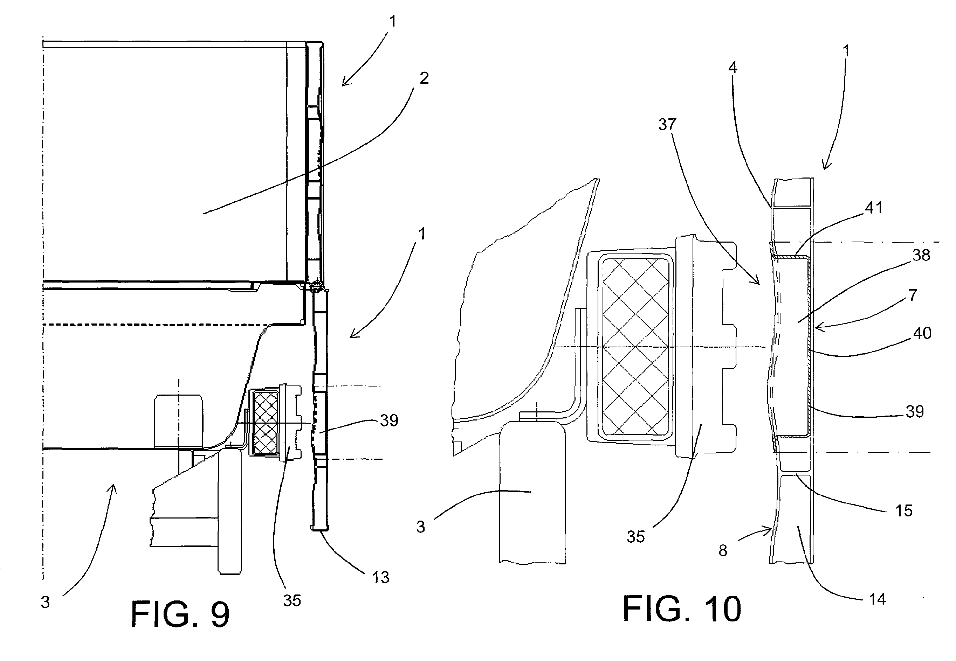

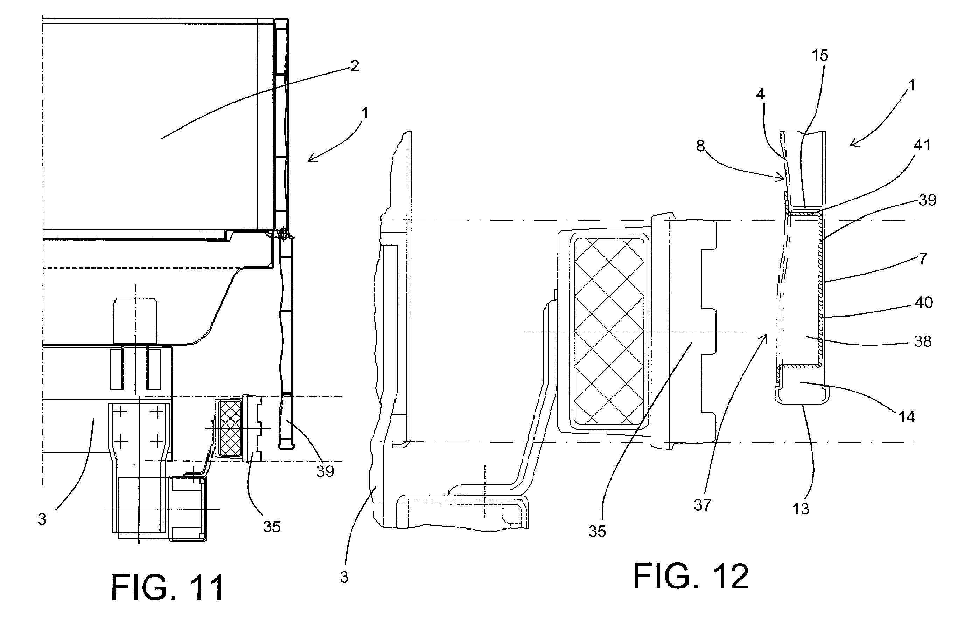

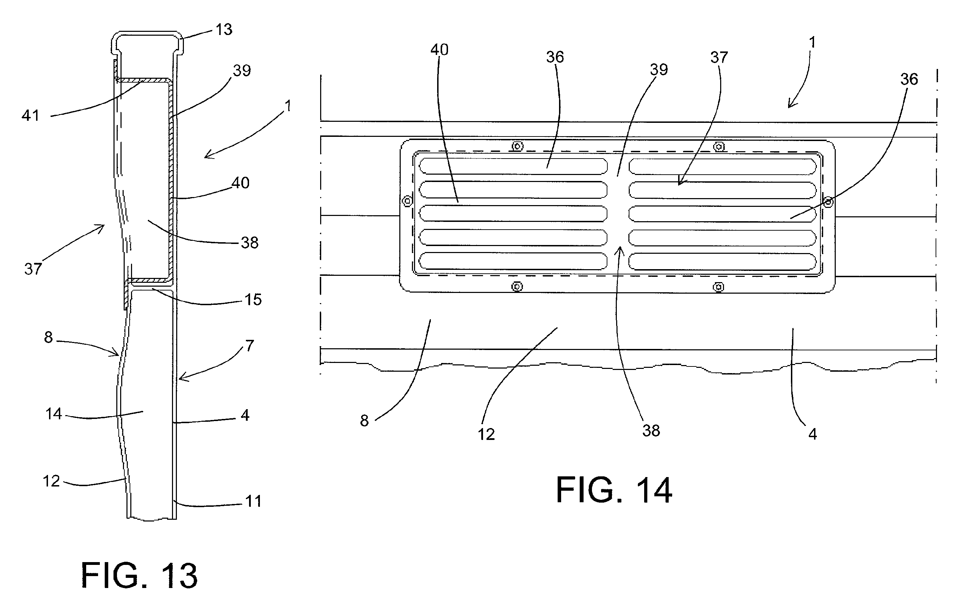

According to the embodiment shown in Figures 9 through 14, the board 1 therefore has a plurality of through holes 36 that allow light to pass through the board 1 itself.

In particular, according to a preferred embodiment, the main section bar 4 has an opening 37 obtained in one of the walls (the outer one 12 in the accompanying tables, but this is not binding) and identifying an internal compartment 38 in the board 1. In this opening 37 is mounted a tray shaped covering element 39, substantially counter-shaped with respect to the opening.

The bottom 40 of the covering element 39 is applied directly to the other wall (the inner wall 11 in the accompanying tables), whilst the lateral edge 41 is peripherally associated to the opening 37. A plurality of through holes 36 is obtained through the bottom 40 and the wall 11 whereto the bottom 40 is applied. Light is thereby allowed to pass through the board 1, with the advantage of preventing water and/or dirt from infiltrating inside the chamber 14 defined by the main section bar 4.

In general, the present invention achieves important advantages.

In the first place, the board of the present invention, thanks to the undulated conformation of the outer wall, has greater longitudinal rigidity, which limits its ability to flex when it is open.

Secondly, in the board of the present invention the outer surface is available for the possible application of advertisements, also thanks to the positioning of the fastening means in proximity to the base portion.

Moreover, in the illustrated embodiments of the present invention the fastening means are obtained by an appropriate conformation of the outer wall, which enhances the rigidity of the board unlike traditional solutions in which the latching tooth is obtained with an interruption of the outer wall in correspondence with that segment.

Additionally, the contoured shape of the heads (shape which can, for instance, be obtained by localised pressing of the secondary section bar) allows to prevent water and/or dirt from infiltrating between the main section bar and the heads, as well as to reduce friction and noise when the vehicle travels.

The boards of the present invention are nearly free from possible grips which may cause cyclists or motorcyclists to be snagged when the vehicle travels.

If the fastening means are provided with connecting elements of the type shown in Figure 6, when the sheet is not mounted, there are no noises due to the shaking of the connecting elements, which remain locked in the positions of stable equilibrium.

It should also be noted that the present invention is relatively easy to construct and that the cost connected to its implementation is not very high.

The invention thus conceived can be subject to numerous modifications and variations, without thereby departing from the scope of the inventive concept that characterises it.

All components can be replaced by other technically equivalent elements and in practice all materials used, as well as the shapes and dimensions of the various components, can be any depending on requirements.

## Claims

1. Board for bodies (2) for vehicles (3) comprising a main section bar (4) made of aluminium, elongated according to a main direction of development, extending from a first end portion (5) to a second end portion (6) and having an inner surface (7), an outer surface (8) and a base portion (10) able to be associated to a bottom wall of a box (2), and a first and a second aluminium heads (16), (17) respectively associated to the first and to the second end portion (5), (6);
**characterised in that** at least said outer surface (8) of the main section bar (4) is undulated at least in correspondence with the first end portion (5), and **in that** at least the first head (16) is elongated perpendicularly relative to said main direction of development and comprises at least a first outer connecting shoulder (18) developing at least in part on said outer surface (8) of the main section bar (4) and being substantially counter-shaped thereto.

2. Board as claimed in claim 1 **characterised in that** said first head (16) further comprises a first inner connecting shoulder (20) developing at least in part on said inner surface (7) of the main section bar (4) and being substantially counter-shaped thereto.

3. Board as claimed in claim 1 o 2 **characterised in that** said outer surface (8) of the main section bar (4) is undulated also in correspondence with the second end portion (6), and **in that** also the second head (17) is elongated perpendicularly relative to said main direction of development and comprises at least a second outer connecting shoulder (19) developing at least in part on said outer surface (8) of the main section bar (4) and being substantially counter-shaped thereto.

4. Board as claimed in claim 3 **characterised in that** said second head (17) further comprises a second inner connecting shoulder (21) developing at least in part on said inner surface (7) of the main section bar (4) and being substantially counter-shaped thereto.

5. Board as claimed in claim 3 o 4 **characterised in that** said outer surface (8) of the main section bar (4) is undulated along its entire extension from the first to the second end portion (5), (6).

6. Board as claimed in any of the previous claims **characterised in that** said main section bar (4) comprises at least an inner wall (11) externally defining said inner surface (7), an outer wall (12) externally defining said outer surface (8), and a head wall (13) joining the inner wall (11) to the outer wall (12), said base portion (10) further joining said inner wall (11) to said outer wall (12), said main section bar (4) defining one or more chambers in its interior (14).

7. Board as claimed in any of the previous claims **characterised in that** it further comprises fastening means (25) for fastening to the board (1) itself a covering sheet for the body (2).

8. Board as claimed in claim 7 **characterised in that** said fastening means (25) comprise at least a seat (26) obtained in said outer surface (8) and extending parallel to said main direction of development.

9. Board as claimed in claim 8 **characterised in that** it further comprises a plurality of connecting elements (29) inserted in sliding fashion in said seat (26).

10. Board as claimed in claim 9 **characterised in that** said connecting elements (29) comprises a base (30) inserted in sliding fashion in said seat (26) and a ring (31) pivotally engaged to said base (30) and movable between a first position in which it is parallel to the board (1) and a second position in which it is perpendicular to the board (1) itself.

11. Board as claimed in claim 10 **characterised in that** when said ring (31) is in the first position it is recessed relative to said outer surface (8).

12. Board as claimed in claim 10 or 11 **characterised in that** said ring (31) is elastically deformed and is in stable equilibrium condition when it is substantially in said first and second position, and it is in unstable equilibrium condition when it is in intermediate positions between said first and second position.

13. Board as claimed in any of the claims from 7 through 12, **characterised in that** said fastening means (25) are positioned in proximity to the base portion (10) of the board (1).

14. Board as claimed in any of the previous claims **characterised in that** it has a plurality of through holes (36) extending from said outer surface (8) to said inner surface (7) to allow light to pass through the board (1).

15. Board as claimed in claims 6 and 14, **characterised in that** said main section bar (4) has an opening (37) obtained in one of said walls and identifying an internal compartment (38) in said board (1), and **in that** it further comprises a tray shaped covering element (39), substantially counter-shaped to said inner compartment (38), inserted in the opening (37) and having a bottom (40) applied to the other of said walls, and a lateral edge peripherally associated to the opening (37), a plurality of through holes (36) being obtained through said bottom (40) and the wall whereto said bottom (40) is applied to allow the passage of light.

16. Board as claimed in claim 15 **characterised in that** said opening (37) is obtained in said outer wall (12), the bottom (40) of the covering element (39) being applied to the inner wall (11) internally to the board (1).

17. Board as claimed in any of the previous claims **characterised in that** each of said heads (16), (17), has a housing (22) and is provided with locking means (23) mounted in said housing (22).

18. Board as claimed in any of the previous claims **characterised in that** said main section bar (4) is constituted by a single piece.

19. Board as claimed in any of the previous claims **characterised in that** each of said heads (16), (17) is constituted by a single piece.

20. Body for vehicles (3) having a plurality of lateral boards, **characterised in that** at least one of the boards is as claimed in any of the claims (1) through (19).

21. Vehicle comprising a body (2) for transporting material having a plurality of lateral boards, , **characterised in that** at least one of the boards is as claimed in any of the claims (1) through (19).
